Europäisches Patentamt

European Patent Office

Office européen des brevets

(19)

(11) Veröffentlichungsnummer: **0 174 023**
**B1**

(12) **EUROPÄISCHE PATENTSCHRIFT**

(45) Veröffentlichungstag der Patentschrifft:
21.03.90

(21) Anmeldenummer: 85111197.1

(22) Anmeldetag: 05.09.85

(51) Int. Cl. ⁵: **B 62 B 1/20,** B 62 B 1/22

(54) Fahrgerät.

(30) Priorität: 06.09.84 DE 8426286 U

(43) Veröffentlichungstag der Anmeldung:
12.03.86 Patentblatt 86/11

(45) Bekanntmachung des Hinweises auf die Patenterteilung:
21.03.90 Patentblatt 90/12

㊵ Bennante Vertragsstaaten:
AT BE CH DE FR GB IT LI NL SE

(56) Entgegenhaltungen:
FR-A-1 287 203
GB-A-220 482
GB-A-784 716
GB-A-2 038 723
US-A-4 471 996

(73) Patentinhaber: Jakel, Bernhard
Tiefe Gasse 4
D-6967 Buchen-Hettingen (DE)

(72) Erfinder: Jakel, Bernhard
Tiefe Gasse 4
D-6967 Buchen-Hettingen (DE)

(74) Vertreter: Hach, Hans Karl, Dr.
Tarunstrasse 23
D-6950 Mosbach-Waldstadt (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 174 023 B1

## Beschreibung

Die Erfindung betrifft ein Fahrgerät mit einem ersten Rahmen, der aus zwei parallelen Bügeln gebildet ist, die an einem Ende mit einer quer zu den Bügeln gerichteten Achse eines Laufrades und am anderen Ende mit einer quer zu den Bügeln gerichteten Querstange verbunden sind, mit einem zweiten Rahmen, der aus zwei parallelen Haltestangen gebildet ist, die am einen Ende Haltegriffe aufweisen und am anderen Ende mittels einer quer zu den Haltestangen gerichteten Querstange miteinander verbunden sind in einem Abstand größer als der der Bügel, so daß die Bügel zwischen die Haltestangen passen, und mit zwei Schwenklagern zum gelenkigen Verbinden je eines Bügels einwärts gelegen, parallel mit einer Haltestange, deren gemeinsame Schwenkachse sich parallel zu den Querstangen erstreckt.

Bei einem aus der US-PS-4 471 996 bekannten Fahrgerät dieser Art ist auf dem ersten Rahmen eine Schaufel montiert und die Querstange des ersten Rahmens erstreckt sich entlang der Schwenkachse. In einer ersten Schwenkstellung wird eine Schubkarre gebildet, deren Fuß die abgewinkelten querstangenseitigen Enden der Haltestange bilden. Diese Schwenkstellung wird gesichert durch ein besonderes Halteelement, das zu diesem Zweck entsprechend eingestellt werden muß. In einer anderen Schwenkstellung sind die Haltegriffe hochgeschwenkt, der Fuß liegt an der Schaufel an und die Schaufel liegt flach auf dem Boden, so daß sie leicht beladen werden kann.

Ein Bienenkasten ist an sich unhandlich, es ist ein Kasten von einer Größe von 40 cm x 50 cm x 80 cm je nach Art des Systems, mit welchem der Bienenzüchter imkert. Da sich in der Regel in diesen Kästen immer Bienen, Bienenwaben und Honig befindet, wiegt so ein Kasten zwischen 40 und 80 kg. An diesen Kästen sind keine geeigneten Tragegriffe für den Transport vorhanden. Deshalb ist es sehr schwierig für den Imker, den Transport seiner Bienenkästen allein durchzuführen. Üblicherweise verwendet er eine sogenannte Trage, ähnlich einer Tragbahre, wobei jedoch zwei Personen den Transport durchführen müssen.

Der Erfindung liegt die Aufgabe zugrunde, ein Fahrgerät der eingangs genannten Art so auszugestalten, daß damit bequem Bienenkästen und andere kastenförmige Lasten aufgenommen und transportiert werden können.

Die der Erfindung zugrundeliegende Aufgabe wird dadurch gelöst, daß die Schwenkbewegung der Rahmen gegeneinander um die Schwenkachse in der einen Richtung und in der Gegenrichtung begrenzt ist jeweils durch Anschlagen der Querstange gegen den ersten Rahmen und daß die Querstangen die Backen einer aus den beiden Rahmen gebildeten Zange bilden zum Festklemmen einer zwischen den Querstangen angeordneten Last.

Die beiden Rahmen können scherenartig auseinander bewegt werden, wobei zwischen den Rahmen ein Kasten zangenartig geklemmt werden kann. Auf diese Weise ist es auf einfache Weise möglich, den zwischen den Rahmen befindlichen Kasten durch Anheben des einen Rahmens an den Griffen und durch Schieben auf dem Laufrad zu bewegen.

Eine Ausgestaltung, bei der der Abstand der Querstangen und damit die Spreizung der durch diese Querstangen gebildeten Zange variabel ist, ist Gegenstand des Anspruchs 2.

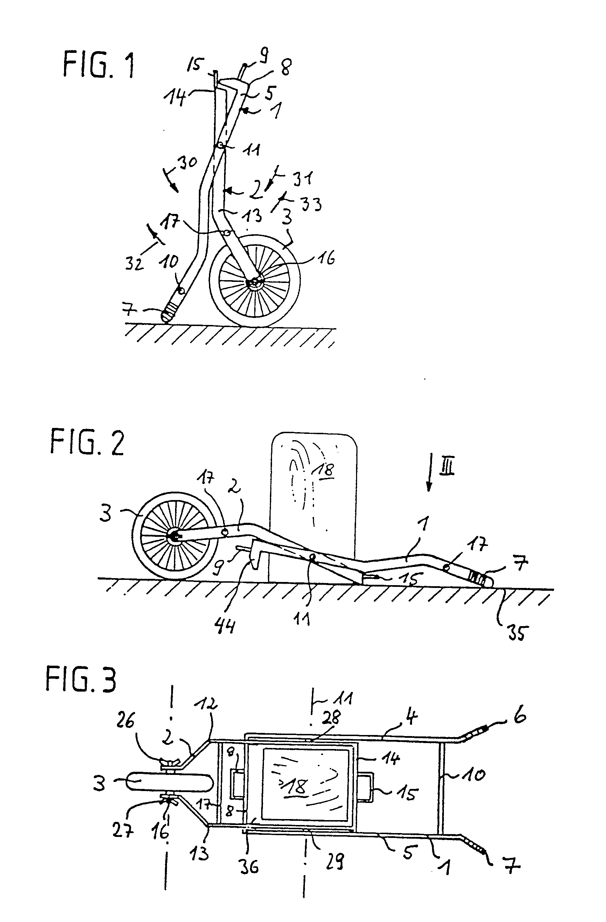

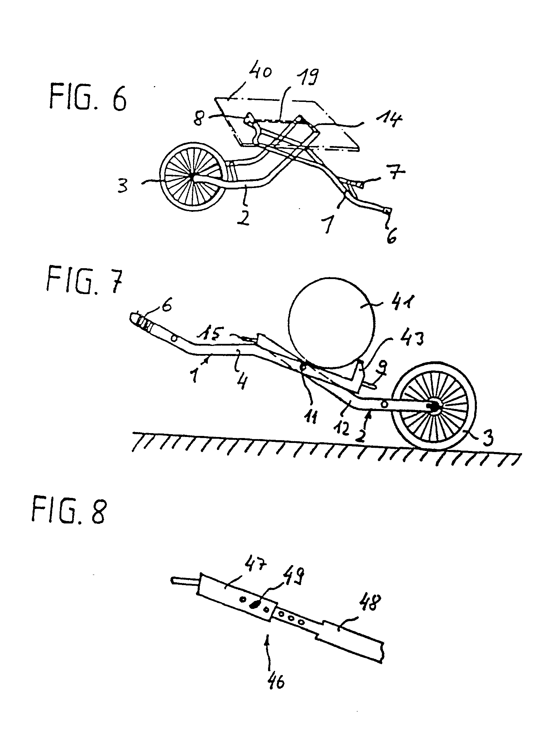

Bedeutungsvoll ist es, daß das Fahrgerät zur Unterbringung und für den eigenen Transport zusammengeklappt werden kann, daß es in auseinandergeklapptem Zustand in einer Orientierung als Schubkarre zum Transport von von oben aufgesetzter Last eingesetzt werden kann, wie weiter unten im einzelnen anhand von Figur 7 noch erläutert wird, und daß es in einer anderen Orientierung – wie bereits ausgeführt – dazu dienen kann, eine Last, die auf dem Boden steht, durch Einklemmen hochzuheben, ohne daß diese Last von oben aufgesetzt werden muß. Die so eingeklemmte Last kann dann fortgefahren werden. Diese letztgenannte Funktion wird anhand der Figuren 2 bis 5 erläutert. Schließlich ist es noch möglich, das Fahrgerät als Tischgestell einzusetzen. Diese Funktion wird anhand der Figur 6 erläutert und darauf bezieht sich Anspruch 6.

Die Erfindung wird nun anhand der beigefügten Zeichnungen näher erläutert. Es zeigen:

Figur 1 von der Seite gesehen das Fahrgerät zusammengeklappt in Ruhestellung,

Figur 2 von der Seite gesehen das Fahrgerät auseinandergeklappt, bereit zum Anheben einer Last,

Figur 3 die Ansicht gemäß dem Pfeil III aus Figur 2,

Figur 4 das Fahrgerät von der Seite gesehen in der Stellung wie in Figur 2, jedoch mit angehobenen Griffen umklammernd angesetzt an die Last,

Figur 5 das Fahrgerät von der Seite gesehen beim Transportieren der Last aus Figur 3 bis 4,

Figur 6 das Fahrgerät in perspektivischer Darstellung verwendet als Tischgestell mit einer aufgelegten Tischplatte,

Figur 7 das Fahrgerät auseinandergeklappt gegenüber Figur 2 um eine Horizontalachse um 180 Grad gedreht, von der dem Beschauer von Figur 2 abgekehrten Seite gesehen, verwendet nach Art einer Schubkarre zum Transportieren einer aufgelegten Last, und

Figur 8 abgebrochen dargestellt den dem Laufrad zugeordneten Rahmen eines abgeänderten Ausführungsbeispiels, der in der Länge ausziehbar ist.

Die Erfindung betrifft ein Fahrgerät zum Transport von Lasten. Dieses Fahrgerät ist geeignet zum Lastentransport nach Art einer Schubkarre wie in Figur 7 dargestellt, es ist aber auch geeignet zum Aufheben einer auf dem Boden abgestellten Last, Einklammern derselben und Abtransport derselben, wie dies im einzelnen noch anhand der Figuren 2 bis 5 erläutert wird. Außerdem kann das Fahrgerät als Gestell eines Tisches dienen, wie dies anhand der Figur 6 erläutert wird.

Das Fahrgerät besteht im wesentlichen aus den beiden schwenkbar miteinander verbundenen Rahmen 1 und 2 und dem Laufrad 3.

Der Rahmen 1 weist die beiden Haltestangen 4 und 5 auf, die sich parallel zueinander erstrekken. An ihrem einen Ende sind die beiden Haltestangen jeweils nach außen gebogen und diese Enden dienen als Haltegriffe 6 und 7. Die anderen Enden der beiden Haltestangen 4 und 5 sind mit einer Querstange 8, die sich senkrecht zu den Haltestangen 4 und 5 erstreckt, miteinander verbunden. Auf der den Haltegriffen 6 und 7 abgekehrten Seite ist in der Mitte dieser Querstange 8 ein Griff 9 angeordnet, der als Handgriff ausgebildet ist. Zur Stabilisierung sind die mit den Haltegriffen 6 und 7 ausgestatteten Enden der Haltestangen 4 und 5 durch die Verbindungsstange 10 miteinander verbunden. Die Verbindungsstange 10 erstreckt sich parallel zur Querstange 8.

Der Rahmen 2 weist die beiden Bügel 12 und 13 auf, die durch die Querstange 14 und die Verbindungsstange 17 miteinander verbunden sind. Die Querstange 14 und die Verbindungsstange 17 erstrecken sich parallel zueinander und parallel zur Querstange 8 und zur Verbindungsstange 10. Zwischen der Querstange 14 und der Verbindungsstange 17 erstrecken sich die beiden Bügel 12 und 13 parallel zueinander und parallel zu den Haltestangen 4 und 5. Die Bügel 12, 13 erstrekken sich im Zwischenraum zwischen den Haltestangen 4 und 5. Die über die Verbindungsstange 17 hinausragenden Enden der Bügel 12, 13 sind einwärts gewinkelt. An diesen freien Enden der Bügel 12, 13 ist eine Radachse 16 verschraubt. Diese Radachse ist mit von Hand betätigbaren Muttern 26, 27 lösbar. Die Radachse 16 erstreckt sich parallel zu den Verbindungsstangen 10, 17 und den Querstangen 8, 14.

Auf der Radachse 16 sitzt drehbar das Laufrad 3. An der dem Laufrad abgekehrten Seite der Querstange 14 ist in der Mitte ein Griff 15 befestigt, der als Handgriff ausgebildet ist.

Die beiden Rahmen 1 und 2 sind durch Schwenklager 28, 29 schwenkbar um die Achse 11 miteinander verbunden. Das Schwenklager 29 verbindet den Bügel 12 mit der Haltestange 4 und das Schwenklager 28 verbindet den Bügel 13 mit der Haltestange 5. Da die Bügel 12, 13 geringeren Abstand voneinander haben als die Haltestangen 4 und 5 und innerhalb des Zwischenraums der Haltestangen 4 und 5 liegen, ist der Rahmen 2 gegenüber dem Rahmen 1 um die Achse 11 aus der in Figur 1 gezeichneten Ruhestellung bis in die in Figur 2 gezeichnete, auseinandergeklappte Bereitstellung schwenkbar.

Die Achse 11 erstreckt sich parallel zu den Querstangen 8, 14 und den Verbindungsstangen 10, 17. Die Schwenkbewegung in Richtung der Pfeile 30, 31 gemäß Figur 1 ist begrenzt durch die Querstange 8, die in der in Figur 1 gezeichneten Stellung gegen den Uhrzeigersinn gegen den Griff 15 schlägt. Die Schwenkbewegung in Richtung der Pfeile 32, 33 ist in der in Figur 2 dargestellten Stellung begrenzt durch die Querstange 8, die gemäß Figur 2 von unten gegen die Bügel 12 und 13 schlägt. Im Zwischenbereich zwischen diesen beiden Schwenkstellung können gemäß den Pfeilen 30 bis 33 die beiden Rahmen alle Zwischenstellungen der Schwenkbewegung einnehmen.

In Figur 2 ist das auseinandergeklappte Fahrgerät auf den Boden 35 abgelegt dargestellt. Das Fahrgerät ist so abgelegt, daß sich die Querstange 8 unterhalb des Rahmens 2 befindet, wie dies besonders gut auch aus Figur 3 ersichtlich ist. Das Fahrgerät liegt mit dem Laufrad 3 und den Haltegriffen 6 und 7 auf dem Boden. Will man nun mit dem Fahrgerät eine Last, beispielsweise einen Bienenkasten 18, transportieren, dann geht man folgendermaßen vor.

Zunächst setzt man die Last beziehungsweise den Bienenkasten 18 in den rechteckigen freien Raum 36, der durch die Querstangen 8 und 14 und die Bügel 12 und 13 begrenzt ist. Dazu kann man den Bienenkasten in diesen freien Raum 36 hineinheben. Wenn der Bienenkasten aber zu schwer ist oder es ist zu unbequem, den Bienenkasten in diesen freien Raum 36 von oben einzusetzen, dann kann man ihn auch auf dem Boden 35 stehenlassen und das Fahrgerät über den stehenden Bienenkasten 18 stülpen, so daß sich die in Figur 2 und 3 gezeichnete Stellung der Teile ergibt, in der der Bienenkasten 18 beziehungsweise die Last in dem freien rechteckigen Raum 36 steht.

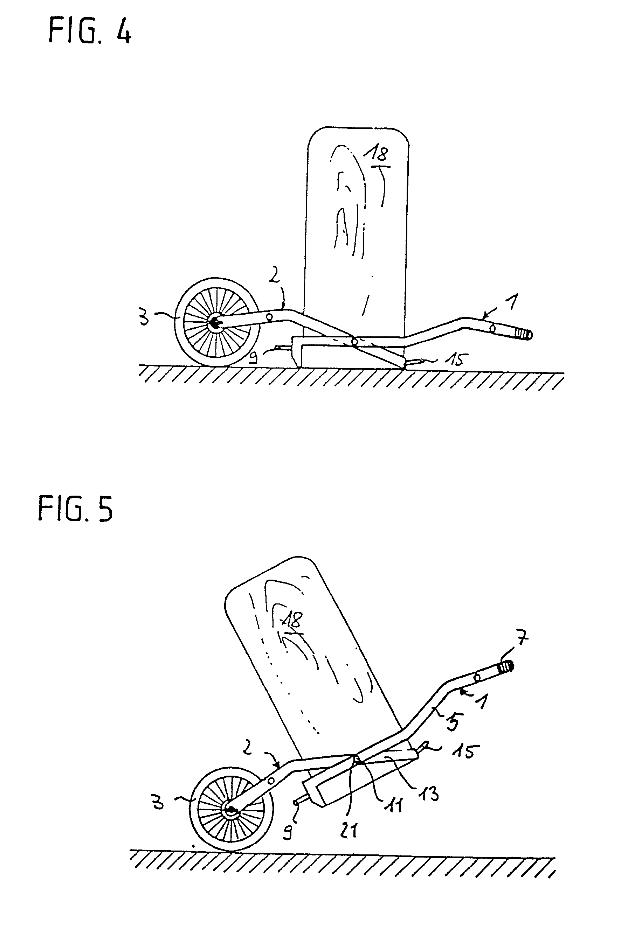

Ist das geschehen, dann wird das Fahrgerät an den Haltegriffen 6 und 7 angehoben. Die Teile geraten zunächst in die in Figur 4 dargestellte Stellung, in der die beiden Querstangen 8 und 14 wie Backen einer Zange sich an gegenüberliegenden Seiten der Last, also des Bienenkastens 18, anlegen und diese zwischen sich einklemmen. Das Laufrad 3 wirkt dabei als Widerlager und zwischen den Rahmen 2 und 1 entsteht eine zunehmende Zangenwirkung. Werden nun die Haltegriffe 6, 7 weiter angehoben, dann verstärkt sich die Einklemmung der Last beziehungsweise des Bienenkastens 18 zwischen den Querstangen 8 und 14, wobei gleichzeitig die Last angehoben wird und in der in Figur 5 dargestellten Stellung der Teile fortgerollt werden kann.

Das Absetzen und Abnehmen der Last geschieht auf umgekehrtem Wege.

Bemerkenswert ist, daß man mit dem Fahrgerät eine schwere auf dem Boden stehende Last ergreifen, anheben, wegrollen und wieder absetzen kann, ohne daß man die Last ohne Zuhilfenahme des Fahrgerätes anheben muß, wie das zum Beispiel beim Beladen von normalen Schubkarren der Fall ist. Das macht es möglich, daß eine Person eine schwere Last, die ohne Hilfsmittel nicht anzuheben ist, mit dem Fahrgerät anhebt und wegtransportiert. Dazu ist es nur erforderlich, das Fahrgerät über die auf dem Boden stehende Last zu stülpen. Das Fahrgerät ist zu diesem Zweck leicht genug ausgebildet, so daß es von Hand angehoben werden kann und das geschieht bequem durch Zugriff an den Griffen 9 und 15. Es können alle Arten von Lasten auf diese Weise transportiert werden, wesentlich ist nur, daß sie im unteren Bereich stabil genug sind, so daß sie der Zangenwirkung der beiden Querstangen 8 und 14 Widerstand leisten können.

In Figur 6 ist eine andere Verwendungsmöglichkeit des erfindungsgemäßen Fahrgerätes dargestellt. Das Fahrgerät ruht nach Figur 6 auf dem Laufrad 3 und den Haltegriffen 6 und 7 des Rahmens 1. Es ist gegenüber der Darstellung aus Figur 2 bis 5 um 180 Grad um seine Längsachse gedreht, so daß die Querstange 8 oberhalb des Rahmens 2 liegt. Die beiden Rahmen stehen in einer Zwischenstellung zwischen den in Figur 1 und 2 gezeichneten Schwenkstellungen zueinander und werden in dieser Stellung gehalten durch einen Zuganker 19, der nicht dehnbar und an den Querstangen 8 und 14 eingehängt ist. Es ist nun möglich, auf die beiden Querstangen 8 und 14, die sich in dieser Stellung etwa auf gleicher Höhe befinden, eine in Figur 6 strichpunktiert eingezeichnete Platte 40 aufzulegen, die als Tischplatte dienen kann. In dieser Stellung kann das Fahrgerät als Tischgestell und mit der aufgelegten Platte als Tisch Verwendung finden. Durch Anheben an den Haltegriffen 6 und 7 ist es auf einfache Weise möglich, diesen Tisch von einem Ort zu einem anderen auf dem Laufrad 3 zu verschieben.

Das Fahrgerät ist auch nach Art einer üblichen Schubkarre verwendbar. Zu diesem Zweck wird es auseinandergeklappt wie in Figur 2 um 180 Grad um seine Längsachse gedreht und wie in Figur 7 dargestellt eingesetzt. Es kann nun eine Last 41, zum Beispiel eine Tonne, quer über die beiden Rahmen gelegt und wie bei einer Schubkarre abtransportiert werden. Die Querstange 8 stützt sich dabei von oben auf dem Rahmen 2 ab.

Die Enden der Haltestangen 4 und 5, die durch die Querstange 8 miteinander verbunden sind, sind, bezogen auf die Figur 7, nach oben abgewinkelt. Diese Abwinkelungen sind mit 43 und 44 bezeichnet und bilden einen Anschlag für die in der Schubkarrenfunktion aufgelegte Last 41, so daß diese nicht nach vorn zum Laufrad 3 abrutschen kann.

Die Rahmen 1 und 2 bestehen aus Eisenrohren, Aluminiumrohren, Edelstahlrohren oder ähnlichem Rohr- oder Stangenmaterial.

Man kann den Abstand der Querstangen 8 und 14 und damit die Spreizung der durch diese Querstangen gebildeten Zange variabel gestalten. Das ist bei einem abgeänderten Ausführungsbeispiel geschehen. Bei diesem Ausführungsbeispiel sind wie in Figur 8 dargestellt, die den Bügeln 12 und 13 entsprechenden Bügel in der Länge verstellbar. Der dem Bügel 12 entsprechende Bügel 46 ist in Figur 8 abgebrochen dargestellt. Er besteht aus zwei Teilen 47, 48, die ineinandersteckbar sind und ist durch einen Querbolzen 49, der durch vorbereitete Löcher an beiden Teilen 47, 48 hindurchgesteckt ist, in verschiedenen Längeneinstellungen sicherbar. Entsprechend ist auch der gegenüberliegende Bügel längenverstellbar. Die den Haltestangen entsprechenden Haltestangen können alternativ oder zusätzlich entsprechend längenverstellbar ausgebildet sein.

## Patentansprüche

1. Fahrgerät mit einem ersten Rahmen (2), der aus zwei parallelen Bügeln (12, 13) gebildet ist, die an einem Ende mit einer quer zu den Bügeln gerichteten Achse (16) eines Laufrades (3) und am anderen Ende mit einer quer zu den Bügeln gerichteten Querstange (14) verbunden sind,

   — mit einem zweiten Rahmen (1), der aus zwei parallelen Haltestangen (4, 5) gebildet ist, die am einen Ende Haltegriffe (6, 7) aufweisen und am anderen Ende mittels einer quer zu den Haltestangen gerichteten Querstange miteinander verbunden sind in einem Abstand größer als der der Bügel (12, 13), so daß die Bügel zwischen die Haltestangen passen, und
   — mit zwei Schwenklagern (28, 29) zum gelenkigen Verbinden je eines Bügels einwärts gelegen, parallel mit einer Haltestange, deren gemeinsame Schwenkachse (11) sich parallel zu den Querstangen (8, 14) erstreckt, dadurch gekennzeichnet,
   — daß die Schwenkbewegung der Rahmen (1, 2) gegeneinander um die Schwenkachse (11) in der einen Richtung (30, 31) und in der Gegenrichtung (32, 33) begrenzt ist jeweils durch Anschlagen der Querstange (8) gegen den ersten Rahmen (2) und
   — daß die Querstangen (8, 14) die Backen einer aus den beiden Rahmen (1, 2) gebildeten Zange bilden zum Festklemmen einer zwischen den Querstangen angeordneten Last (18).

2. Fahrgerät nach Anspruch 1, dadurch gekennzeichnet, daß der Abstand der Querstangen (8, 14) variabel ist durch in der Länge verstellbar ausgestaltete Bügel (46) und/oder Haltestangen. (Figur 8)

3. Fahrgerät nach Anspruch 1 oder 2, dadurch gekennzeichnet, daß auf der den Haltegriffen (6, 7) abgekehrten Seite in der Mitte der Querstange (8) ein Handgriff (9) angeordnet ist.

4. Fahrgerät nach einem der vorhergehenden Ansprüche, dadurch gekennzeichnet, daß an der dem Laufrad (3) abgekehrten Seite in der Mitte der Querstange (14) ein Handgriff (15) angeordnet ist.

EP 0 174 023 B1

5. Fahrgerät nach einem der vorhergehenden Ansprüche, dadurch gekennzeichnet, daß die mit den Haltegriffen (6, 7) ausgestatteten Enden der Haltestangen (4, 5) durch eine sich parallel zur Querstange (8) erstreckende Verbindungsstange (10) miteinander verbunden sind.

6. Fahrgerät nach einem der vorhergehenden Ansprüche, dadurch gekennzeichnet, daß ein Zuganker (19) vorgesehen ist zur Verbindung der Querstangen (8, 14) miteinander.

## Claims

1. Propelling implement with a first frame (2) formed from two parallel members (12, 13) connected at one end to an axle (16) of a wheel (3) directed at right angles to the members, and at the other end to a crossbar (14) directed at right angles to the members, with a second frame (1) formed from two parallel holding bars (4, 5) having at one end bolding grips (6, 7) and which are connected at the other end by means of a cross-bar directed at right angles to the bolding bar with a spacing greater than that of the members (12, 13), so that the latter fit between the holding bars and with two pivot bearings (28, 29) for the articulated connection of in each case one inwards located member parallel to a bolding bar, whose common pivot pin (11) extends parallel to the cross-bars (8, 14), characterized in that the pivoting movement of the frames (1, 2) with respect to one another about the pivot pin (11) is limited in one direction (30, 31) and in the opposite direction (32, 33) in each case the cross-bar (8) striking against the first frame (2) and that the cross-bars (8, 14) form the jaws of a clamp formed from the two frames (1, 2) for clamping a load (18) located between the cross-bars.

2. Propelling implement according to claim 1, characterized in that the spacing of the cross-bars (8, 14) is variable by length-adjustable members (46) and/or holding bars (fig. 8).

3. Propelling implement according to claims 1 or 2, characterized in that a handle (9) is arranged in the centre of cross-bar (8) on the side remote from the holding grips (6, 7).

4. Propelling implement according to one of the preceding claims, characterized in that a handle (15) is arranged in the centre of the cross-bar (14) on the side remote from the wheel (3).

5. Propelling implement according to one of the preceding claims, characterized in that the ends of the holding bars (4, 5) equipped with the holding grips (6, 7) are interconnected by a connecting rod (10) extending parallel to cross-bar (8).

6. Propelling implement according to one of the preceding claims, characterized in that a tie bar (19) is provided for interconnecting the cross-bars (8, 14).

## Revendications

1. Appareil de transport, comprenant un premier cadre (2) constitué par deux longerons parallèles (12, 13) qui sont reliés à une extrémité par un axe (16) d'une roue porteuse (3) dirigé transversalement par rapport aux longerons, et à l'autre extrémité par une traverse (14) dirigée transversalement par rapport aux longerons,

– comprenant un second cadre (1) constitué par deux barres de retenue parallèles (4, 5) qui comportent des organes de préhension (6, 7) à une extrémité et qui sont reliées à l'autre extrémité au moyen d'une traverse dirigée transversalement par rapport aux barres de retenue à une distance supérieure à celle des longerons (12, 13), de sorte que les longerons s'ajustent entre les barres de retenue, et:
– comprenant deux paliers de pivotement (28, 29) pour relier de manière articulée à une barre de retenue chaque longeron situé vers l'intérieur et parallèle, paliers dont l'axe de pivotement commun (11) s'étend parallèlement aux traverses (8, 14), caractérisé par le fait
– que le mouvement de pivotement des cadres (1, 2) l'un par rapport à l'autre autour de l'axe de pivotement (11) est à chaque fois limité dans l'une des directions (30, 31) et dans la direction opposée (32, 33) par la traverse (8) qui vient en butée sur le premier cadre (2), et:
– que les traverses (8, 14) constituent les mâchoires d'une pince formée par les deux cadres (1, 2) pour le serrage d'une charge (18) disposée entre les traverses.

2. Appareil de transport selon la revendication 1, caractérisé par le fait que la distance des traverses (8, 14) est variable grâce à des longerons (46) et/ou à des barres de retenue qui sont conformées de sorte que leur longueur soit réglable (figure 8).

3. Appareil de transport selon la revendication 1 ou 2, caractérisé par le fait qu'une poignée (9) est disposée au milieu de la traverse (8) du côté opposé aux organes de préhension (6, 7).

4. Appareil de transport selon l'une des revendications précédentes, caractérisé par le fait qu'une poignée (15) est disposée au milieu de la traverse (14) du côté opposé à la roue porteuse (3).

5. Appareil de transport selon l'une des revendications précédentes, caractérisé par le fait que les extrémités des barres de retenue (4, 5) qui sont équipées d'organes de préhension (6, 7) sont reliées entre elles par une barre de liaison (10) s'étendant parallèlement à la traverse (8).

6. Appareil de transport selon l'une des revendications précédentes, caractérisé par le fait qu'un tirant (19) est prévu pour relier entre elles les traverses (8, 14).

FIG. 1

FIG. 2

FIG. 3

FIG. 4

FIG. 5

FIG. 6

FIG. 7

FIG. 8